Europäisches Patentamt

European Patent Office

Office européen des brevets

(19)

(11) Publication number: **0 275 320**
A1

## EUROPEAN PATENT APPLICATION

(12)

published in accordance with Art. 158(3) EPC

(21) Application number: 87904311.5

(22) Date of filing: 01.07.87

Data of the international appli-
cation taken as a basis:

(86) International application number:
PCT/JP 87/00457

(87) International publication number:
WO 88/00407 (14.01.88 88/2)

(51) Int. Cl.⁴: **H 02 K 17/16**

(30) Priority: 03.07.86 JP 155167/86

(43) Date of publication of application: 27.07.88
Bulletin 88/30

(84) Designated Contracting States: DE FR GB

(71) Applicant: FANUC LTD, 3580, Shibokusa Aza-Komanba Oshino-mura, Minamitsuru-gun Yamanashi 401-05 (JP)

(72) Inventor: NAKAMURA, Kousei, 1-2-8, Asahigaoka, Hino-shi Tokyo 191 (JP)
Inventor: KATSUZAWA, Yukio, 724, Shimoyugi, Hachioji-shi Tokyo 192-03 (JP)

(74) Representative: Allman, Peter John et al, MARKS & CLERK Suite 301 Sunlight House Quay Street, Manchester M3 3JY (GB)

(54) STRUCTURE OF A SQUIRREL-CAGE ROTOR.

(57) A structure of a squirrel-cage rotor used for high-output induction motors, wherein slots of the squirrel-cage rotor are constituted by a suitable combination of open slots and closed slots, so that good electric conductors (16) in the slots will not protrude beyond the slots with centrifugal force under the high-speed running conditions and that the magnetic flux is scarcely permitted to leak.

EP 0 275 320 A1

00275320

## DESCRIPTION

TITLE OF THE INVENTION

Structure of Squirrel Cage Rotor

TECHNICAL FIELD

The present invention relates to a structure of a rotor of an induction motor, more particularly, to a structure of a squirrel cage rotor for high velocity revolution.

BACKGROUND ART

High frequency waves have been attained by the development of recent inverter techniques, and thus an induction motor, more particularly, an induction motor having a squirrel cage rotor, is now able to rotate at a high velocity. Electrical conductors having a high conductivity are inserted or molded into slots of the squirrel cage rotor. These slots are usually open at the outer surface of the rotor. The rotor core consists of electromagnetic steel plates, for example, silicon steel plates. This is because, if the slots are closed by the steel plates, part of magnetic flux generated in the stator leaks therethrough, and thus the magnetic flux crossing the electrical conductors is decreased to reduce the output power of the motor.

However, the above electrical conductors are projected outside of the rotor by being moved or deformed outwards by the centrifugal force generated at a high revolution speed of the rotor. When this projection moves beyond the outer surface of the rotor, the electrical conductors come into contact with the stator core and may be damaged.

DISCLOSURE OF THE INVENTION

In order to solve the above-mentioned problem, an object of the present invention is to provide a squirrel cage rotor having a structure which consists of a mixture of open type slots and closed type slots to prevent the electrical conductors from being projected out of slots by the centrifugal force generated at a high revolution speed of the rotor, and which greatly reduces the amount of leakage of the magnetic flux and thus ensures a high output power of the motor.

Considering the above mentioned object, the present invention provides a structure of a squirrel cage rotor of an induction motor having a rotor core constructed by superposing a plurality of element plates having slot element bores at the periphery thereof, characterised in that each slot formed by superposing said element plates so as to align each slot element bore, is closed at appropriate positions in a direction of a rotational central axis of said squirrel cage rotor. According to the above mentioned invention, a squirrel cage rotor can be provided wherein each bar constructing the squirrel cage and disposed in the slot of the rotor is not projected out by the centrifugal force generated by the high revolution speed of the rotor and a reduced leakage of the magnetic flux can be obtained.

BRIEF DESCRIPTION OF THE DRAWINGS

Figure 1 is a cross sectional view, taken along line I-I of Fig. 2, showing a section of a squirrel cage rotor according to the present invention;

Fig. 2 is a longitudinal sectional view of the same rotor; and

Fig. 3 is a partial enlarged view taken along an arrow A.

BEST MODE FOR CARRYING OUT THE INVENTION

The present invention is described in more detail in the following in accordance with the embodiments shown in the attached drawings.

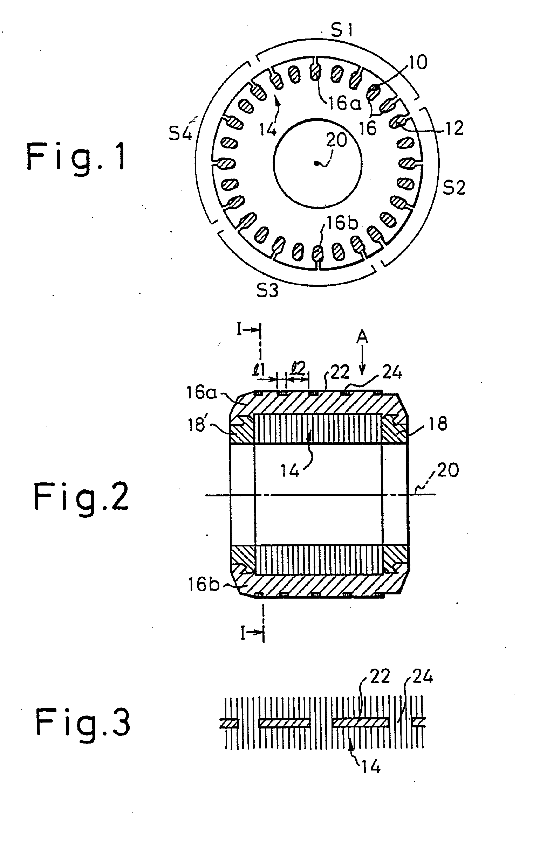

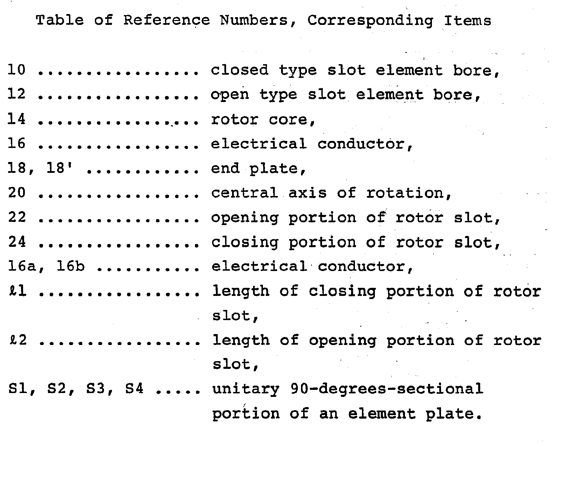

Referring to Fig. 1, slots for electrical conductors to be inserted or disposed therein are formed at the periphery of a rotor core 14 constructed by superposing annular silicon steel element plates into the form of a rotor. Two kinds of element plates are prepared for one embodiment according to the present invention. The first of these two kinds is an element plate formed in such a manner that all the slot element bores for forming the slots by superposing the element plates are opened outwardly. The second is an element plate (Fig. 1) formed in such a manner that the group of slot element bores thereof consists of two kinds of slot element bores, one of which is the same open type slot element bore 12 as the aforesaid element bore, and the other is the closed type slot element bore 10 which is closed at the periphery of the element plate. A four-poles type induction motor is considered in this embodiment. Each of the element plates to be superposed is formed so as to comprise four axes of rotational symmetry from the viewpoint of torque balance. That is, the open type slot element bore 12 and the closed type slot element bore 10 are not disposed arbitrarily. The arrangement of all the slot element bores 10 and 12 of the second element plate is made by four unitary arrangements each of which is an arrangement of the slot element bores 10 and 12 in one quarter sectional portion of the element plate. This means that the unitary arrangement of the slot element bores 10 and 12 in each of four 90-degrees-sectional portions S1, S2, S3, and S4 shown in Fig. 1 is the same as the other. The above mentioned two kinds of element plates are superposed in such a manner that each slot arranged in parallel with the central axis 20 of rotation is closed at appropriate positions of the outer surface of the rotor, each of which positions is in the direction of the central axis 20 of rotation. The squirrel cage rotor is made by molding an electrical conductor 16 such as aluminium into each slot.

Now referring to Fig. 2 and Fig. 3, the structure of the rotor is explained along the direction in parallel with the central axis 20 of rotation. The electrical conductors 16a, 16b in Fig. 2 correspond to the electrical conductors 16a, 16b in Fig. 1. Referring to Fig. 1 showing the cross sectional view taken along line I-I of Fig. 2, the electrical conductors 16a, 16b are molded in the open type slot element bores 12. At the right position of the line I-I in Fig. 2, the electrical conductors 16a, 16b are covered with the outer closing portions 24 having the length $\ell 1$ along the direction in parallel with the central axis 20 of rotation on the rotor core 14. At the right of the position, the electrical conductors 16a, 16b are again exposed through the outer opening portions 22 having the length $\ell 2$ on the rotor core 14. That is, the electrical conductors 16a, 16b are molded in the slots, each of which is formed by arranging a group having the length $\ell 1$ of the closed type slot element bores 10 and a group having the length $\ell 2$ of the open type slot element bores 12 alternately along the direction in parallel with the central axis 20 of rotation. Hereinafter, the group of the closed type slot element bores 10 is called a closed type slot, and the group of the open type slot element bores 12 is called an open type slot. Other electrical conductors are also molded in other slots formed by arranging the closed type slot and the open type slot alternately. Each left or right hand end of each electrical conductor is connected respectively by an end plate 18 or 18', which is separated from the other in the direction of the central axis 20 of rotation.

The closing portion 24 on the outer surface of the rotor core 14, which forms the closed type slot, is formed in order to prevent an electrical conductor 16 having a low mechanical strength, such as aluminium, from being deformed or displaced by the centrifugal force generated by the revolution of the rotor. The closing portion 24 is made out of steel and has a high mechanical strength, so the length $\ell 1$ may be short. Further, a short total length of the closed type slots is desirable in view of preventing a leakage of magnetic flux which should be crossed with the electrical conductors, which magnetic flux is generated by the stator. And the closed type slots should be dispersed in the direction of the central axis 20 of rotor in order to suppress undesirable deformation of the electrical conductor by the centrifugal force. Consequently, the closed type slots having a short length $\ell 1$ may be disposed at a few positions (five positions in this embodiment) in the direction of the central axis of rotation.

As another embodiment, each element plate consists of one kind of steel plate which is made by arranging the open type slot element bore and the closed type slot element bore alternately. As the method for superposing the element plates, for example, an open type slot element bore of one element plate and a closed type slot element bore of another element plate adjacent to the former element plate, may be overlapped alternately. The structure of the rotor core constructed by only one kind of steel plate brings the advantage of low production costs of the rotor.

As apparent from the foregoing description, according to the present invention, a structure of a squirrel cage rotor of an induction motor capable of enduring a high revolution speed and having a high output power can be provided, which structure can endure a centrifugal force as the core holds the electrical conductors firmly at positions of closed type slots, and greatly reduces the leakage of magnetic flux, as a region of closed type slots closing the electrical conductor firmly is formed so as to be a minimum area.

## CLAIMS

1.  A structure of a squirrel cage rotor of an induction motor having a rotor core constructed by superposing a plurality of element plates having slot element bores at the periphery thereof, characterised in that each slot formed by superposing said element plates so as to align each slot element bore, is closed at appropriate positions in a direction of a rotational central axis of said squirrel cage rotor.

2.  A structure of a squirrel cage rotor according to claim 1 wherein said element plates of said rotor core constructing slots of said squirrel cage rotor consists of two kinds of steel plates, in one of which steel plates all slot element bores thereof are open type slot element bores, and in the other of which steel plates all slot element bores thereof are of open type slot element bores and closed type slot element bores arranged so that the latter plate has the same number of axes of rotational symmetry as the pole number of the motor.

3.  A structure of a squirrel cage rotor according to claim 1 wherein said element plates of said rotor core constructing slots of said squirrel cage rotor consists of one kind of steel plate, said steel plate having slot element bores being of an open type slot element bore and a closed type slot element bore arranged alternately.

Fig.1

Fig.2

Fig.3

00275320

Table of Reference Numbers, Corresponding Items

| | |
|---|---|
| 10 | closed type slot element bore, |
| 12 | open type slot element bore, |
| 14 | rotor core, |
| 16 | electrical conductor, |
| 18, 18' | end plate, |
| 20 | central axis of rotation, |
| 22 | opening portion of rotor slot, |
| 24 | closing portion of rotor slot, |
| 16a, 16b | electrical conductor, |
| $\ell 1$ | length of closing portion of rotor slot, |
| $\ell 2$ | length of opening portion of rotor slot, |
| S1, S2, S3, S4 | unitary 90-degrees-sectional portion of an element plate. |

00275320

# INTERNATIONAL SEARCH REPORT

International Application No **PCT/JP87/00457**

## I. CLASSIFICATION OF SUBJECT MATTER (if several classification symbols apply, indicate all) [3]

According to International Patent Classification (IPC) or to both National Classification and IPC

Int.Cl$^4$ H02K17/16

## II. FIELDS SEARCHED

Minimum Documentation Searched [4]

| Classification System | Classification Symbols |
|---|---|
| IPC | H02K17/16 |

Documentation Searched other than Minimum Documentation
to the Extent that such Documents are Included in the Fields Searched [5]

| | |
|---|---|
| Jitsuyo Shinan Koho | 1926 – 1986 |
| Kokai Jitsuyo Shinan Koho | 1971 – 1986 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X, Y | JP, A, 55-29291 (Sanyo Electric Co., Ltd.) 1 March 1980 (01. 03. 80) (Family: none) | 1-3 |
| Y | JP, U, 55-162374 (Toshiba Corp.) 21 November 1980 (21. 11. 80) (Family: none) | 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [3] | Date of Mailing of this International Search Report [3] |
|---|---|
| September 16, 1987 (16. 09. 87) | October 5, 1987 (05. 10. 87) |
| International Searching Authority [1] | Signature of Authorized Officer [20] |
| Japanese Patent Office | |

Form PCT/ISA/210 (second sheet) (October 1977)